# EUROPEAN PATENT SPECIFICATION

(11) **EP 2 014 067 B1**
(45) Date of publication and mention of the grant of the patent: **02.10.2019**
(21) Application number: 07755913.6
(22) Date of filing: 23.04.2007
(51) Int. Cl.: H04L 29/06, H04W 8/18, H04W 12/04, H04W 12/06, H04W 12/08

(54) **PROVISIONED CONFIGURATION FOR AUTOMATIC WIRELESS CONNECTION**
BEREITGESTELLTE KONFIGURATION FÜR AUTOMATISCHE DRAHTLOSE VERBINDUNG
CONFIGURATION PROVISIONNEE POUR LA CONNEXION SANS FIL AUTOMATIQUE

(30) Priority: 24.04.2006 US 794625 P; 02.05.2006 US 796845 P; 18.04.2007 US 788371
(43) Date of publication of application: 14.01.2009
(73) Proprietor: ARRIS Enterprises LLC, Suwanee, GA 30024 (US)
(72) Inventor: YANG, Bo-Chieh, Sunnyvale, California 94089 (US); SHEU, Ming, Sunnyvale, California 94089 (US); KUO, Ted Tsei, Sunnyvale, California 94089 (US); LIN, Tian-Yuan, Sunnyvale, California 94089 (US); JOU, Tyan-Shu, Sunnyvale, California 94089 (US)
(74) Representative: Käck, Stefan
(86) International application number: PCT/US2007/009836
(87) International publication number: WO 2007/127162

(56) References cited:
- EP-A- 1 638 261
- WO-A-01/84323
- US-A1- 2003 162 533
- US-A1- 2004 214 570
- US-A1- 2004 214 570
- US-A1- 2005 228 874

## Description

### BACKGROUND OF THE INVENTION

### Field of the Invention

The present invention generally relates to information network security. More specifically, the present invention relates to user-friendly systems for configuring wireless devices for access to restricted wireless networks.

### Description of Related Art

A variety of user authentication and security measures for wireless networks have been proposed by a number of professional organizations. These professional organizations include the Institute of Electrical and Electronics Engineers (IEEE) 802.11 Working Group, the Wi-Fi Alliance, and the Internet Engineering Task Force (IETF). Various other groups such as wireless equipment vendors offer their own proprietary wireless security protocols. Depending on the particular source, implementing these protocols has generally been complicated, difficult to maintain, and requires a high level of technical knowledge by those implementing a particular protocol.

Another complication is that each organization may have specialized needs with respect to security for its wireless networks. For example, different departments within an organization may require different protocols. Some individuals, however, may require access to multiple networks, which requires that their wireless device be configured with multiple protocols. Further, some individuals may require access to particular networks but may not be authorized to access those networks. As such, many commercial organizations (e.g., small- and medium-sized businesses) have difficulties implementing security systems for wireless networks because of their lack of expertise and/or full-time professional technical support.

For example, a network administrator may have the requisite technical knowledge to implement such security systems but may have to configure every wireless client station individually. This is in addition to instructing each user on how to configure their wireless device to conform to certain wireless connection parameters. Further, various technical complications may arise for users and network administrator personnel including different wireless devices and interfaces, different requirements for access, and different restrictions on access.

Notwithstanding the many measures available for securing a wireless network, implementing any one of these measures may be complicated, difficult, and/or require extensive maintenance. There is, therefore, a need in the art for improved systems and methods that provide for restricted access to secured wireless networks that are user-friendly and easily maintained without requiring a high degree of technical expertise and/or ongoing technical support.

In US 2005/0228874 A1 a system and method is provided to verify configuration of a client access device requesting access to a network by establishing a communications link between a network access system and the client access device to authenticate and authorize the client access device and a user associated with the client access device. The network access system further receives client device configuration data from the client access device over the communications link during an authentication and authorization exchange and processes the client device configuration data to determine if the client access device will be granted access to the network.

### SUMMARY OF THE INVENTION

The invention is defined in claims 1, 8, and 15, respectively. Particular embodiments are set out in the dependent claims.

Exemplary systems and methods of the present invention provide for provisioned configuration of wireless devices to allow access to restricted wireless networks. Using an open wireless or wired network, a user of a wireless device may be authenticated. An executable application, which includes the parameters and policies of a provisioned configuration, is generated, transferred to, and executed on the wireless device. Following configuration by the application, the wireless device is allowed to access the restricted wireless network within the parameters and policies of the provisioned configuration as provided through the executable application.

The executable applications providing such provisioned configurations may be generated based on authentication information concerning the user and/or the wireless device. Some embodiments include determining from a provisioned configuration database which parameters and policies are associated with the user and/or wireless device. In some embodiments of the present invention, the application may provide a plurality of provisioned configurations for the wireless device. Each of the plurality of provisioned configurations may include parameters and policies for a plurality of wireless networks. The executable application may be capable of configuring a wireless device for access to a variety of different wireless networks.

The present invention also includes systems for provisioned configuration of wireless devices. Such systems include an authentication module, a processor, a provisioned configuration database, and an application generation module.

The present invention further includes computer readable storage media and instructions for provisioned configuration of wireless devices.

### BRIEF DESCRIPTION OF FIGURES

FIGURE 1 is an illustration of a system for provisioned configuration of wireless devices to access a restricted wireless network in accordance with an exemplary embodiment of the present invention.
FIGURE 2 is a flowchart illustrating a method for generating a configuration application in accordance with an exemplary embodiment of the present invention.
FIGURE 3 is a flowchart illustrating a method for wireless devices to access a restricted wireless network in accordance with an exemplary embodiment of the present invention.
FIGURE 4 is a flowchart illustrating a method for provisioned configuration of a wireless device to access a restricted wireless network in accordance with an exemplary embodiment of the present invention.

### DETAILED DESCRIPTION

Embodiments of the present invention include systems and methods for user-friendly, low-maintenance configuration of wireless devices for accessing restricted wireless networks. A user of a wireless device is allowed to connect to an open wireless or wired network. After the user is authenticated, an application may be generated that would allow the wireless device to connect to a secured or restricted wireless network. The application, after being transferred to and executed on the wireless device, configures the wireless device so that it may access the restricted wireless network. The configuration, which may also referred to as a provisioned configuration, may be based on user information, wireless device information, or both. In some embodiments, the application may be able to configure the wireless device so that it may access a plurality of wireless networks.

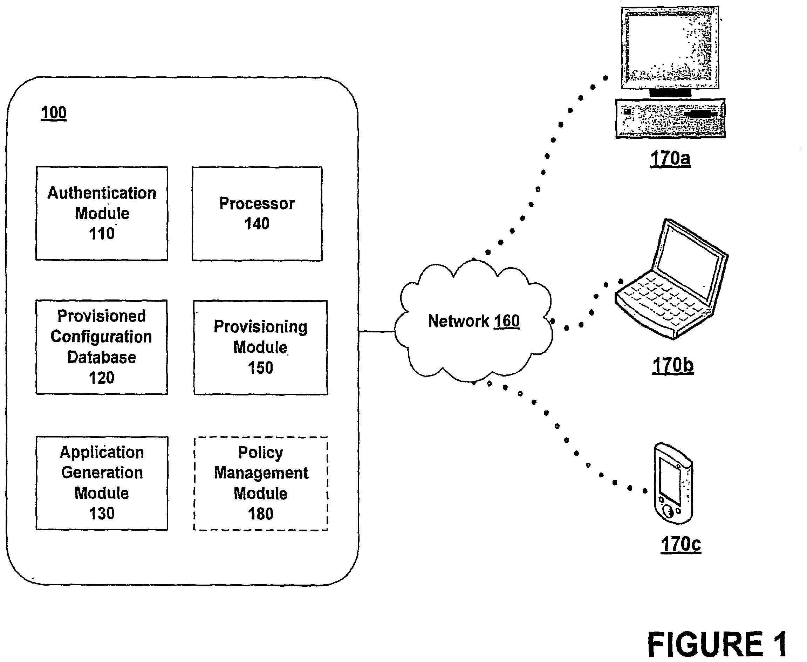

FIGURE 1 is an illustration of a system for provisioned configuration of wireless devices to access a restricted wireless network **160** in accordance with an exemplary embodiment of the present invention. Authentication server **100,** as illustrated in FIGURE 1, includes an authentication module **110,** a provisioned configuration database **120,** an application generation module **130,** a processor **140,** a provisioning module **150,** and policy management module **180.** The authentication server **100** may be used to maintain security in network **160.** Various client devices, such as wireless workstation **170a,** laptop **170b,** and mobile device **170c** belong to potential users of network **160.**

A module (or application), as referenced in the present invention, should be generally understood as a collection of routines that perform various system-level functions and may be dynamically loaded and unloaded by hardware and device drivers as required. The modular software components described herein may also be incorporated as part of a larger software platform or integrated as part of an application specific component.

Authentication module **110** authenticates a user (e.g., laptop **170b**) and verifies that the user is who they purport to be and that they are otherwise authorized to access network **160.** The authentication module **110** may be used to verify a user name and password supplied by the user over a wired or wireless network. Verification may occur through comparison with user names and passwords stored in an authentication database, which may be independent of or incorporated into authentication module **110.** Once authenticated by authentication module **110,** the user may access data and perform actions within network **160** based on the user's security clearance level, the parameters of the user's role in the organization, as defined by a network administrator, and as may be further governed by the parameters and policies of a provisioned configuration. Authentication module **110** may implement certain authentication policies disclosed in U.S. patent application number 11/788,371 filed April 18, 2007 and entitled "Dynamic Authentication in Secured Wireless Networks ".

Provisioned configuration database **120** stores information concerning various sets of parameters and policies that may be used to configure a wireless device for access to network **160.** Provisioned configured database **120** may further store certificates, shared secrets, private keys, and a variety of other information. These parameters and policies may include information used to configure a wireless device for connection to a restricted wireless network and access policies related to the same, such as a wireless network name, wireless device parameters, adapter configurations, security-related parameters, access constraints, quality of service parameters, security-related parameters, and the like. Provisioned configuration database **120** may further store information concerning the users and/or wireless devices associated with one or more provisioned configurations.

In an exemplary embodiment, an authenticated user may request access to a restricted wireless network. A provisioned configuration associated with that user and/or the wireless device belonging to the user may be found by searching provisioned configuration database **120.** Once that provisioned configuration is located and subsequently installed on the wireless device belonging to the user, the user is allowed to access the wireless network **160** using the wireless device. Further, the provisioned configuration restricts the user from accessing any portion or sub-sets of the network for which the user is not authorized. Provisioned configuration database **120** may operate in conjunction with and provide provisioned configuration information to other components of authentication server **100,** including (but not limited to) application generation module **130,** provisioning module **150,** and optional policy management module **180.**

In some embodiments, and as referenced above, provisioned configuration database **120** may operate in conjunction with application generation module **130.** Using a provisioned configuration provided by provisioned configuration database **120,** application generation module **130** generates an application for configuring a wireless device according to the provisioned configuration. The application may then be transferred to the wireless device via provisioning module **150** as discussed in further detail herein. The application may execute automatically, or the application may be manually executed by the user. Once executed, the application may survey the wireless device, configure the wireless device, and/or connect the wireless device to the restricted wireless network **160.** Configuring the wireless device may include installing any or all of the parameters, policies, and the like included in the provisioned configuration acquired from database **120.** Once configured, the wireless device can access the wireless network **160** within the parameters and policies of the provisioned configuration.

Processor **140** is configured to execute a variety of operations. For example, by using authentication information concerning the user and/or the wireless device, the processor **140** may search provisioned configuration database **120** for a provisioned configuration that is associated with the user and/or the wireless device. Processor **140,** by executing instructions and/or applying data sets related to and/or provided by application generation module **130,** may then generate the aforementioned configuration application. Processor **140,** by executing instructions and/or applying data sets related to and/or provided by provisioning module **150,** may provide for the transfer of the configuration application to a wireless device over network **160.**

In an exemplary embodiment of the present invention, a user submits a request for authentication and access to restricted wireless network **160.** The request may include user information (*e.g.,* user name and password) and/or wireless device information. Following an optional authentication operation, processor **140** uses the information from the request to search provisioned configuration database **120** for parameters and policies associated with the user and/or wireless device. That information concerning the aforementioned parameters and policies may then be provided to application generation module **120** for generation of a provisioned configuration application.

Provisioning module **150** is configured to deliver (or allow for the delivery/transfer) the self-configuring application generated by the application generation module **130** to a wireless device. This delivery may occur over an open access network as part of a wireless download operation. Transfer may also occur over a wired network. The parameters and policies, as included in the provisioned configuration, determine whether a user may access a particular wireless network and to what extent. For example, a user may be authorized to access only one wireless network and/or only for certain operations. The provisioned access application provided by provisioning module **150** may implement certain security and/or access policies disclosed in U.S. patent application number 11/788,371 filed April 18, 2007 and entitled "Dynamic Authentication in Secured Wireless Networks".

Network **160** may be configured to transmit various electromagnetic waves, including, for example, radio signals. Network **160** may be an IEEE 802.11 (Wi-Fi or Wireless LAN) network, IEEE 802.16 (WiMAX) network, IEEE 802.16c network, or the like. Network **160** may convey various kinds of information to interface devices, such as client interface devices 170a-C Network **160** may be a local, proprietary network or may be a part of a larger wide-area network.

Various subsidiary networks may reside within the realm of greater network **160** such as peer-to-peer or wireless mesh networks. Portions of network **160** may be "open" to allow for provisioning prior to a device being allowed to access "closed" portions of the same. Network **160,** in some embodiments, may include a wired network for devices **170a-c** (described below) to be authenticated and to download the executable application with provisioned configuration. Certain portions of network **160** may be devoted to authentication and downloading an executable provisioning application whereas other portions may be dedicated for general wireless usage.

Client wireless-interface devices **170a-c** illustrate a variety of wireless-capable devices, including desktop computers, laptop computers, handheld computers, and the like. A user wishing to access the wireless network **160** through wireless device **170a,** for example, may do so by copying, downloading; or otherwise transferring to wireless device **170a** a copy of the application generated by application generation module **130** and made available by provisioning module **150.** The application configures wireless device **170a** so that wireless device **170a** can access the wireless network **160** within the parameters of a provisioned configuration. Wireless device **170b** and wireless device **170c** may be configured in similar fashion.

Optional policy management module **180** may also be included as a part of authentication server **100.** Policy management module **180** may be responsible for management and enforcement of parameters and polices of access for a device access network **160.** The parameters and policies may include those implemented as a part of the provisioned configuration process. These parameters and policies may further include what users are allowed to access to particular network and to what extent (*e.g*., particular operations, limited access, etc.). Some wireless networks may implement policy management and enforcement through a separate server dedicated to policy management and enforcement.

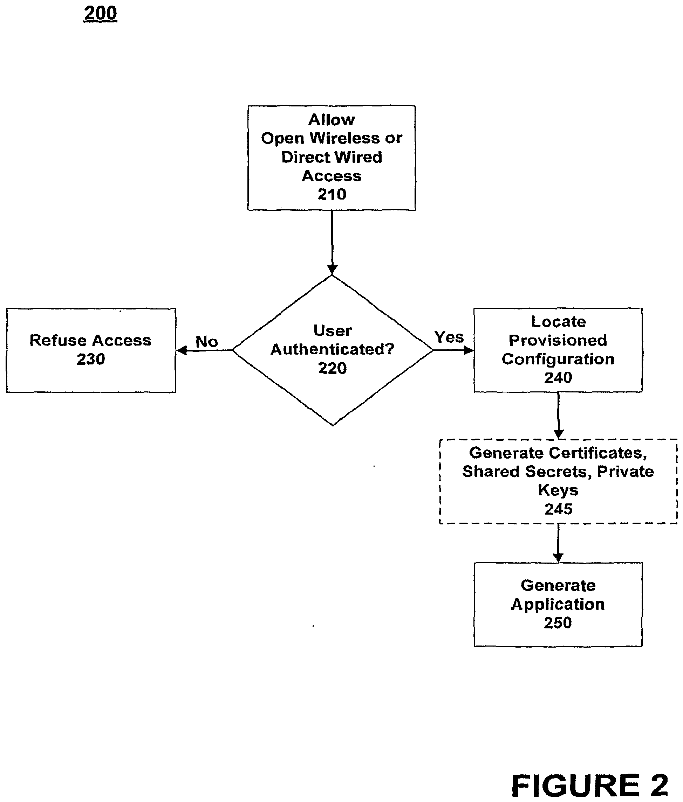

FIGURE 2 is a flowchart illustrating a method 200 for generating a configuration application in accordance with an exemplary embodiment of the present invention. In method 200, a wireless device is allowed to connect to an open wireless network. It is then determined whether the user is successfully authenticated. If the user is not authenticated, the user and wireless device are refused access to the restricted wireless network. If the user is successfully authenticated, a provisioned configuration associated with the authenticated user and/or the wireless device is located. An application for configuration of the wireless device based on the provisioned configuration is generated.

In step **210,** an open wireless network is accessed by a wireless device. The open wireless network is unsecured so that an unauthenticated user and/or wireless device belonging to the user may form a connection. Once the wireless device is connected to the open wireless network, the user and/or wireless device may be allowed to perform various operations, including authentication. Direct wired access may also occur in step **210.**

In step **220,** it is determined whether the user has been successfully authenticated. The user may be authenticated using authentication module **110** using information from the user and/or the wireless device. Initial authentication may include providing a user name and password identifying the user as a particular user. Determining whether the user is successfully authenticated may include verifying that the authentication information from the user and/or wireless device corresponds with the authentication information from the authentication database or authentication module **110.**

In step **230,** the user was not authenticated. This may occur where the user is not currently authorized to access the restricted wireless network, the user entered incorrect authenticated information, or the like. If a user cannot be authenticated, the user may not be allowed to access the restricted wireless network **160.**

In step **240,** the user has been successfully authenticated. The authentication information from the user and/or wireless device may be used to locate the provisioned configuration associated with the user and/or wireless device. Provisioned configuration database **120** may be searched and a provisioned configuration associated with the user and/or wireless device is retrieved.

In optional step **245,** certificates, shared secrets (like those described in U.S. application 11/788,371 for "Dynamic Authentication in Secured Wireless Networks"), and/or private keys may be generated. These certificates and so forth may be generated by application generation module **130** or in conjunction with another optional application dedicated to certificate generation and so forth.

In step **250,** an application including the provisioned configuration is generated by application generation module **130.** This application may include the certificates and so forth generated in.optional step **245.** In some embodiments; the generation operations of step **245** and **250** may be consolidated into a single operation. Using the provisioned configuration located in step **240,** application generation module **130** generates an application that, when executed, will configure the wireless device or another wireless device so that the wireless device can access restricted wireless network **160** within the parameters and policies for the user and/or wireless device.

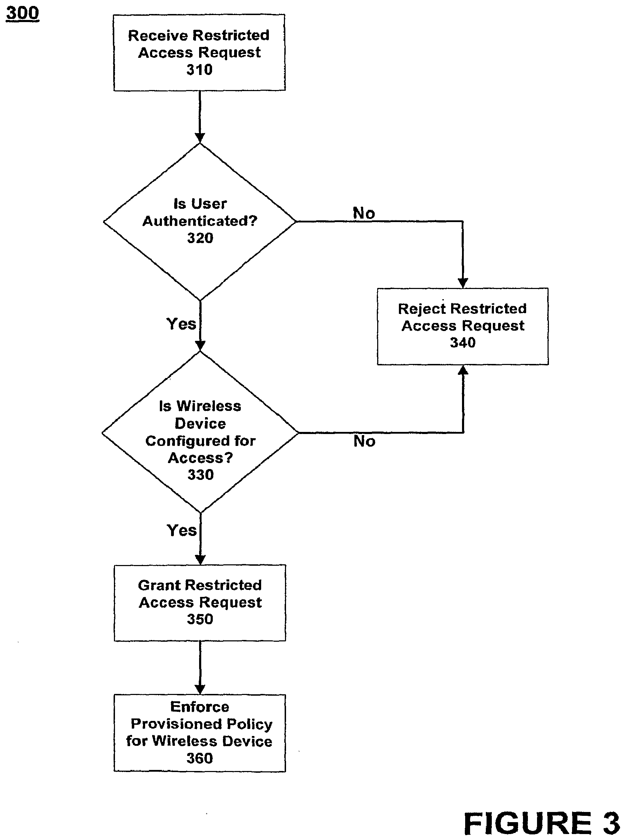

FIGURE 3 is a flowchart illustrating a method **300** for wireless devices to access a restricted wireless network **160** in accordance with an exemplary embodiment of the present invention. In method **300,** a request for access by a wireless device to the restricted wireless network-is received. It is then determined whether the user is successfully authenticated. If the user cannot be successfully authenticated, the request for access is denied. If the user has been successfully authenticated, it is then determined whether the wireless device has a provisioned configuration that would allow for access to the restricted wireless network **160.** If the wireless device has no such provisioned configuration, the request for access to the restricted wireless network **160** is denied. If the wireless device does have a provisioned configuration allowing for access, the request is granted. Further, the parameters and policies of the particular provisioned configuration are enforced for the user, wireless device, and their operations within the restricted wireless network.

In step **310,** a request for access to a restricted wireless network **160** is received from a wireless device belonging to a user. The request for access may be received through an open wireless network, a wired connection, or the like.

In step **320,** it is determined whether the user has been successfully authenticated. The determination may be performed in a manner similar to that of step **220.** If the determination is that the user has been successfully authenticated, the method proceeds to step **330.** If the determination is that the user has not been successfully authenticated, the method proceeds to step **340.**

In step **330,** it has been determined that the user was not successfully authenticated and the request for access to the restricted wireless network **160** is rejected. This may occur where the user is not currently authorized to access the restricted wireless network, the user entered incorrect authenticated information, or the like. Rejection of the access request may include terminating the connection, enforcing various security measures (*e.g*., identifying the illicit or unauthorized access attempt by date, time, and indicia of the user attempting access), or the like.

In step **340,** it has been determined that the user was successfully authenticated. It is then determined whether the wireless device is configured for access to the restricted wireless network. The determination may be made by surveying the wireless device, information from the authentication request, comparing the configuration of the wireless device with the provisioned configuration in provisioned configuration database **120,** or the like. If the wireless device has been configured for access to the restricted wireless network **160,** the method proceeds to step **350.** If it is determined that the wireless device is not configured, the method proceeds to step **330.** Determinations made in step **350** may utilize those techniques disclosed in U.S. patent application number 11/788,371 filed April 18, 2007 and entitled "Dynamic Authentication in Secured Wireless Networks,".

In step **350,** the wireless device has been determined to have been configured for access to the restricted wireless network **160,** and the request for access is granted. In some embodiments, the wireless device may be automatically connected to the restricted wireless network **160.** Alternatively, the connection may be made manually.

In step **360,** access by the wireless device to restricted wireless network 160 is governed by the parameters and policies of the provisioned configuration. Optional policy enforcement module **180** may enforce those parameters and policies, so that the user may only access the network or networks for which the user is authorized.

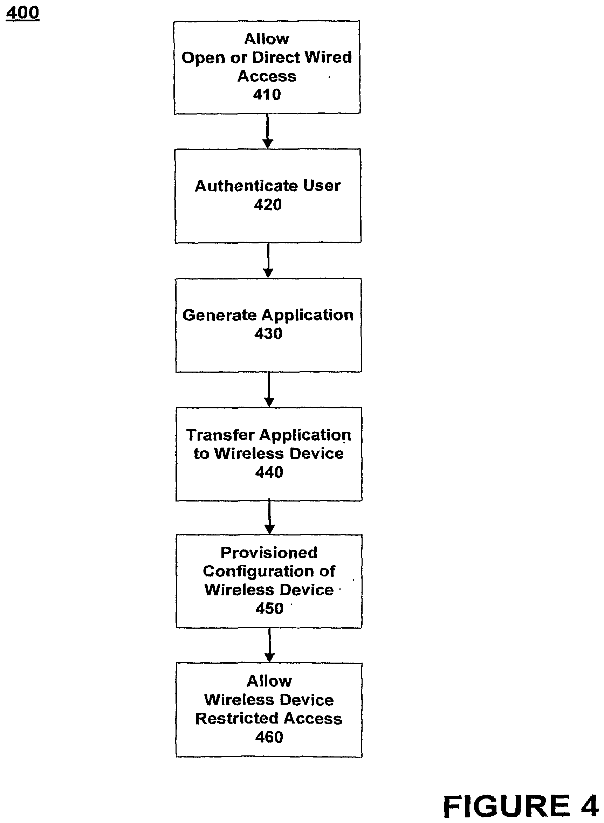

FIGURE 4 is a flowchart illustrating a method for provisioned configuration of a wireless device to access a restricted wireless network **160** in accordance with an exemplary embodiment of the present invention. A wireless device belonging to a user is allowed to connect to an open wireless network. The user is authenticated. Using information from authentication, a configuration application is generated. The application is then transferred to the wireless device. The application provides a provisioned configuration for the wireless device. Once the wireless device is configured, the wireless device may be allowed to access the restricted wireless network **160.**

In step **410,** the wireless device belonging to the user is allowed to access an open wireless network. The connection to the open wireless network may be similar to that of step **210.** Also like step **210,** direct wired access may be provided.

In step **420,** the user is authenticated using authentication module **110.** Authentication of the user and/or wireless device may occur by comparing various information such as user names and passwords against information in an authentication database or authentication module **110.** Techniques disclosed in U.S. patent application number 11/788,371 filed April 18, 2007 and entitled "Dynamic Authentication in Secured Wireless Networks, " may also be utilized.

In step **430,** an application including the provisioned configuration is generated by application generation module **130.** The generation of the application may occur similarly to the generation of the application in step **250.**

In step **440,** the application is transferred to the wireless device via provisioning module **150.** The application may be copied, downloaded, or otherwise transferred to the wireless device. In some embodiments, the application may be automatically transferred to the wireless device after the application is generated in step **430.** Alternatively, the application may be made available for the user to copy, download, or otherwise transfer over the open wireless network. The application may also be provided as a part of a computer-readable medium such as an installation CD or via portable flash memory cards.

In step **450,** the application as provided by provisioning module **150** is executed and provides a provisioned configuration for the wireless device to access restricted wireless network **160.** The application transferred in step **440** may be executed automatically or by the user to install the provisioned configuration, including the various parameters and policies associated with the user and/or wireless device. After the provisioned configuration is installed, the wireless device becomes capable of accessing the restricted wireless network **160**

In step **460,** the wireless device connects to and accesses the restricted wireless network **160.** The wireless device may be connected to the restricted wireless network **160** either automatically or manually. The access to restricted wireless network **160** is governed by the parameters and policies of the provisioned configuration installed on the wireless device and other security measures as may be implemented server-side to maintain to the security of the network **160.** Parameters and polices may be enforced by policy management module **180.**

While the present invention has been described in connection with a series of preferred embodiment, these descriptions are not intended to limit the scope of the invention to the particular forms set forth herein. To the contrary, the present descriptions are intended to cover such alternatives, modifications, and equivalents as may be included within the scope of the invention as defined by the appended claims and otherwise appreciated by one of ordinary skill in the art.

## Claims

1. A method for provisioned configuration of a wireless device (170a-c), the method comprising:
authenticating (420) a user of the wireless device (170a-c) at an authentication server (100);
generating (245) a certificate or a shared secret or a private key through execution of an application generation module (130) of the authentication server (100);
generating (250, 430) an executable application based on at least authentication information provided by the wireless device (170a-c), wherein the executable application is generated through execution of the application generation module (130);
transferring (440) the executable application from the authentication server (100) to the wireless device (170a-c), wherein execution of the executable application by the wireless device (170a-c) configures the wireless device (170a-c) for access to a restricted wireless network (160) in accordance with the provisioned configuration, wherein the configuration includes installing at the wireless device (170a-c) parameters and policies governing access to the restricted wireless network (160), and wherein the configuration includes the certificate or the shared secret or the private key; and
controlling access of the wireless device (170a-c) to the restricted wireless network (160), wherein access to the restricted wireless network (160) is based on at least the parameters and policies installed on the wireless device (170a-c) as a part of the wireless device configuration.

2. The method of claim 1, wherein authenticating (420) the user of the wireless device (170a-c) occurs over an open wireless network or over a wired network.

3. The method of claim 1, wherein the authentication information is associated with provisioned configuration information in a provisioned configuration database (120).

4. The method of claim 1, further comprising associating the configuration settings for the wireless device (170a-c) with the authentication information in a provisioned configuration database (120).

5. The method of claim 1, wherein the authentication information comprises
information concerning the user or
information concerning the wireless device (170a-c).

6. The method of claim 1, wherein the executable application includes a plurality of configuration settings for the wireless device (170a-c).

7. The method of claim 6, wherein each of the plurality of configuration settings includes
parameters and policies for a different restricted wireless network or
a certificate or
a shared secret or
a private key.

8. A system for provisioned configuration of a wireless device (170a-c), the system comprising:
an authentication module (110) executable by a processor (140) to authenticate (420) a user of the wireless device (170a-c);
a provisioned configuration database (120) including a provisioned configuration for the wireless device (170a-c), the provisioned configuration based on at least authentication information identified by the execution of the authentication module (110), wherein the provisioned configuration includes parameters and policies for installation in the wireless device (170a-c), the parameters and policies governing access to a restricted wireless network (160); and
an application generation module (130) executable by the processor (140) to generate (245) a certificate or a shared secret or a private key and to generate (250, 430) an executable application for the wireless device (170a-c) based on at least authentication information provided by the wireless device (170a-c), wherein the executable application configures the wireless device (170a-c) for access to the restricted wireless network (160) based on at least the provisioned configuration, and wherein the provided configuration includes the certificate or the shared secret or the private key;
wherein the provisioned configuration database (120) is further configured to store information concerning the certificates or shared secrets or private keys.

9. The system of claim 8, wherein the authentication information comprises
information concerning the user or
information concerning the wireless device (170a-c).

10. The system of claim 8, wherein the provisioned configuration database (120) is further configured to store information concerning a plurality of parameters and policies of access to restricted wireless networks, associations with users, and associations with wireless devices.

11. The system of claim 8, further comprising a provisioning module (150) executable by a processor (140) to deliver the generated executable application to the wireless device (170a-c) over a communications network.

12. The system of claim 11, wherein the communications network is an open wireless network or a wired network.

13. The system of claim 11, wherein the executable application is executable to provide a plurality of provisioned configurations.

14. The system of claim 13, wherein each of the plurality of provisioned configurations includes parameters and policies for a different restricted wireless network.

15. A computer-readable storage medium having embodied thereon a program, the program being executable by a computer processor to perform a method according to any of claims 1 - 7.

## Patentansprüche

1. Verfahren für die bereitgestellte Konfiguration einer drahtlosen Vorrichtung (170a-c), wobei das Verfahren umfasst:
Authentifizieren (420) eines Benutzers der drahtlosen Vorrichtung (170a-c) an einem Authentifizierungsserver (100) ;
Erzeugen (245) eines Zertifikats oder eines gemeinsamen Geheimnisses oder eines privaten Schlüssels durch die Ausführung eines Anwendungserzeugungsmoduls (130) des Authentifizierungsservers (100);
Erzeugen (250, 430) einer ausführbaren Anwendung auf der Basis von zumindest Authentifizierungsinformationen, die durch die drahtlose Vorrichtung (170a-c) bereitgestellt werden, wobei die ausführbare Anwendung durch die Ausführung des Anwendungserzeugungsmoduls (130) erzeugt wird;
Übertragen (440) der ausführbaren Anwendung vom Authentifizierungsserver (100) zur drahtlosen Vorrichtung (170a-c), wobei die Ausführung der ausführbaren Anwendung durch die drahtlose Vorrichtung (170a-c) die drahtlose Vorrichtung (170a-c) für den Zugang zu einem eingeschränkten drahtlosen Netzwerk (160) gemäß der bereitgestellten Konfiguration konfiguriert, wobei die Konfiguration das Installieren von Parametern und Richtlinien an der drahtlosen Vorrichtung (170a-c) umfasst, die den Zugang zum eingeschränkten drahtlosen Netzwerk (160) regeln, und wobei die Konfiguration das Zertifikat oder das gemeinsame Geheimnis oder den privaten Schlüssel umfasst; und
Steuern des Zugangs der drahtlosen Vorrichtung (170a-c) zum eingeschränkten drahtlosen Netzwerk (160), wobei der Zugang zum eingeschränkten drahtlosen Netzwerk (160) auf zumindest den Parametern und Richtlinien basiert, die an der drahtlosen Vorrichtung (170a-c) als Teil der Konfiguration der drahtlosen Vorrichtung installiert wurden.

2. Verfahren nach Anspruch 1, wobei das Authentifizieren (420) des Benutzers der drahtlosen Vorrichtung (170a-c) über ein offenes drahtloses Netzwerk oder über ein kabelgebundenes Netzwerk erfolgt.

3. Verfahren nach Anspruch 1, wobei die Authentifizierungsinformationen Informationen der bereitgestellten Konfiguration in einer Datenbank (120) von bereitgestellten Konfigurationen zugeordnet sind.

4. Verfahren nach Anspruch 1, das ferner das Zuordnen der Konfigurationseinstellungen für die drahtlose Vorrichtung (170a-c) zu den Authentifizierungsinformationen in einer Datenbank (120) von bereitgestellten Konfigurationen umfasst.

5. Verfahren nach Anspruch 1, wobei die Authentifizierungsinformationen Informationen hinsichtlich des Benutzers oder Informationen hinsichtlich der drahtlosen Vorrichtung (170a-c) umfassen.

6. Verfahren nach Anspruch 1, wobei die ausführbare Anwendung eine Vielzahl von Konfigurationseinstellungen für die drahtlose Vorrichtung (170a-c) umfasst.

7. Verfahren nach Anspruch 6, wobei jede der Vielzahl von Konfigurationseinstellungen umfasst
Parameter und Richtlinien für ein unterschiedliches eingeschränktes drahtloses Netzwerk oder
ein Zertifikat oder
ein gemeinsames Geheimnis oder
einen privaten Schlüssel.

8. System für die bereitgestellte Konfiguration einer drahtlosen Vorrichtung (170a-c), wobei das System umfasst:
ein Authentifizierungsmodul (110), das durch einen Prozessor (140) ausführbar ist, um einen Benutzer der drahtlosen Vorrichtung (170a-c) zu authentifizieren (420);
eine Datenbank (120) von bereitgestellten Konfigurationen mit einer bereitgestellten Konfiguration für die drahtlose Vorrichtung (170a-c), wobei die bereitgestellte Konfiguration zumindest auf Authentifizierungsinformationen basiert, die durch die Ausführung des Authentifizierungsmoduls (110) identifiziert werden, wobei die bereitgestellte Konfiguration Parameter und Richtlinien für die Installation in der drahtlosen Vorrichtung (170a-c) umfasst, wobei die Parameter und Richtlinien den Zugang zu einem eingeschränkten drahtlosen Netzwerk (160) regeln; und
ein Anwendungserzeugungsmodul (130), das durch den Prozessor (140) ausführbar ist, um ein Zertifikat oder ein gemeinsames Geheimnis oder einen privaten Schlüssel zu erzeugen (245) und eine ausführbare Anwendung für die drahtlose Vorrichtung (170a-c) auf der Basis von zumindest Authentifizierungsinformationen zu erzeugen (250, 430), die durch die drahtlose Vorrichtung (170a-c) bereitgestellt werden, wobei die ausführbare Anwendung die drahtlose Vorrichtung (170a-c) für den Zugang zum eingeschränkten drahtlosen Netzwerk (160) auf der Basis zumindest der bereitgestellten Konfiguration konfiguriert, und wobei die bereitgestellte Konfiguration das Zertifikat oder das gemeinsame Geheimnis oder den privaten Schlüssel umfasst;
wobei die Datenbank (120) von bereitgestellten Konfigurationen ferner dazu ausgelegt ist, Informationen hinsichtlich der Zertifikate oder gemeinsamen Geheimnisse oder privaten Schlüssel zu speichern.

9. System nach Anspruch 8, wobei die Authentifizierungsinformationen Informationen hinsichtlich des Benutzers oder Informationen hinsichtlich der drahtlosen Vorrichtung (170a-c) umfassen.

10. System nach Anspruch 8, wobei die Datenbank (120) von bereitgestellten Konfigurationen ferner dazu ausgelegt ist, Informationen hinsichtlich einer Vielzahl von Parametern und Richtlinien für den Zugang zu eingeschränkten drahtlosen Netzwerken, Zuordnungen zu Benutzern und Zuordnungen zu drahtlosen Vorrichtungen zu speichern.

11. System nach Anspruch 8, das ferner ein Bereitstellungsmodul (150) umfasst, das durch einen Prozessor (140) ausführbar ist, um die erzeugte ausführbare Anwendung zur drahtlosen Vorrichtung (170a-c) über ein Kommunikationsnetzwerk zu liefern.

12. System nach Anspruch 11, wobei das Kommunikationsnetzwerk ein offenes drahtloses Netzwerk oder ein kabelgebundenes Netzwerk ist.

13. System nach Anspruch 11, wobei die ausführbare Anwendung ausführbar ist, um eine Vielzahl von bereitgestellten Konfigurationen vorzusehen.

14. System nach Anspruch 13, wobei jede der Vielzahl von bereitgestellten Konfigurationen Parameter und Richtlinien für ein unterschiedliches eingeschränktes drahtloses Netzwerk umfasst.

15. Computerlesbares Speichermedium, auf dem ein Programm enthalten ist, wobei das Programm durch einen Computerprozessor ausführbar ist, um ein Verfahren nach einem der Ansprüche 1-7 durchzuführen.

## Revendications

1. Procédé pour la configuration provisionnée d'un dispositif sans fil (170a-c), le procédé comprenant :
l'authentification (420) d'un utilisateur du dispositif sans fil (170a-c) au niveau d'un serveur d'authentification (100) ;
la génération (245) d'un certificat ou d'un secret partagé ou d'une clé privée par l'intermédiaire de l'exécution d'un module de génération d'application (130) du serveur d'authentification (100) ;
la génération (250, 430) d'une application pouvant être exécutée sur la base d'au moins une information d'authentification qui est fournie par le dispositif sans fil (170a-c), dans lequel l'application pouvant être exécutée est générée par l'intermédiaire de l'exécution du module de génération d'application (130) ;
le transfert (440) de l'application pouvant être exécutée depuis le serveur d'authentification (100) jusqu'au dispositif sans fil (170a-c), dans lequel l'exécution de l'application pouvant être exécutée par le dispositif sans fil (170a-c) configure le dispositif sans fil (170a-c) pour un accès à un réseau sans fil restreint (160) conformément à la configuration provisionnée, dans lequel la configuration inclut l'installation, au niveau du dispositif sans fil (170a-c), de paramètres et de politiques qui gouvernent l'accès au réseau sans fil restreint (160), et dans lequel la configuration inclut le certificat ou le secret partagé ou la clé privée ; et
la commande de l'accès du dispositif sans fil (170a-c) au réseau sans fil restreint (160), dans lequel l'accès au réseau sans fil restreint (160) est basé sur au moins les paramètres et les politiques qui sont installés sur le dispositif sans fil (170a-c) en tant que partie de la configuration du dispositif sans fil.

2. Procédé selon la revendication 1, dans lequel l'authentification (420) de l'utilisateur du dispositif sans fil (170a-c) est réalisée sur un réseau sans fil ouvert ou sur un réseau filaire.

3. Procédé selon la revendication 1, dans lequel l'information d'authentification est associée à une information de configuration provisionnée dans une base de données de configurations provisionnées (120).

4. Procédé selon la revendication 1, comprenant en outre l'association des définitions de configuration pour le dispositif sans fil (170a-c) avec l'information d'authentification dans une base de données de configurations provisionnées (120).

5. Procédé selon la revendication 1, dans lequel l'information d'authentification comprend :
une information qui concerne l'utilisateur ou
une information qui concerne le dispositif sans fil (170a-c).

6. Procédé selon la revendication 1, dans lequel l'application pouvant être exécutée inclut une pluralité de définitions de configuration pour le dispositif sans fil (170a-c).

7. Procédé selon la revendication 6, dans lequel chacune de la pluralité de définitions de configuration inclut :
des paramètres et des politiques pour un réseau sans fil restreint différent ou
un certificat ou
un secret partagé ou
une clé privée.

8. Système pour la configuration provisionnée d'un dispositif sans fil (170a-c), le système comprenant :
un module d'authentification (110) qui peut être exécuté par un processeur (140) pour authentifier (420) un utilisateur du dispositif sans fil (170a-c) ;
une base de données de configurations provisionnées (120) qui inclut une configuration provisionnée pour le dispositif sans fil (170a-c), la configuration provisionnée étant basée sur au moins une information d'authentification qui est identifiée au moyen de l'exécution du module d'authentification (110), dans lequel la configuration provisionnée inclut des paramètres et des politiques qui sont destinés à être installés dans le dispositif sans fil (170a-c), les paramètres et les politiques gouvernant l'accès à un réseau sans fil restreint (160) ; et
un module de génération d'application (130) qui peut être exécuté par le processeur (140) pour générer (245) un certificat ou un secret partagé ou une clé privée et pour générer (250, 430) une application pouvant être exécutée pour le dispositif sans fil (170a-c) sur la base d'au moins une information d'authentification qui est fournie par le dispositif sans fil (170a-c), dans lequel l'application pouvant être exécutée configure le dispositif sans fil (170a-c) pour un accès au réseau sans fil restreint (160) sur la base d'au moins la configuration provisionnée, et dans lequel la configuration provisionnée inclut le certificat ou le secret partagé ou la clé privée ; dans lequel :
la base de données de configurations provisionnées (120) est en outre configurée de manière à ce qu'elle stocke une information qui concerne les certificats ou les secrets partagés ou les clés privées.

9. Système selon la revendication 8, dans lequel l'information d'authentification comprend :
une information qui concerne l'utilisateur ou
une information qui concerne le dispositif sans fil (170a-c).

10. Système selon la revendication 8, dans lequel la base de données de configurations provisionnées (120) est en outre configurée pour stocker une information qui concerne une pluralité de paramètres et de politiques d'accès à des réseaux sans fil restreints, des associations avec des utilisateurs et des associations avec des dispositifs sans fil.

11. Système selon la revendication 8, comprenant en outre un module de provisionnement (150) qui peut être exécuté par un processeur (140) pour délivrer l'application pouvant être exécutée générée au dispositif sans fil (170a-c) sur un réseau de communication.

12. Système selon la revendication 11, dans lequel le réseau de communication est un réseau sans fil ouvert ou un réseau filaire.

13. Système selon la revendication 11, dans lequel l'application pouvant être exécutée peut être exécutée pour fournir une pluralité de configurations provisionnées.

14. Système selon la revendication 13, dans lequel chacune de la pluralité de configurations provisionnées inclut des paramètres et des politiques pour un réseau sans fil restreint différent.

15. Support de stockage pouvant être lu par un ordinateur et comportant un programme intégré en son sein, le programme pouvant être exécuté par un processeur d'ordinateur pour réaliser un procédé selon l'une quelconque des revendications 1 à 7.
